# EUROPÄISCHE PATENTSCHRIFT

(11) **EP 2 998 065 B1**
(45) Veröffentlichungstag und Bekanntmachung des Hinweises auf die Patenterteilung: **06.11.2019**
(21) Anmeldenummer: 15186112.7
(22) Anmeldetag: 21.09.2015
(51) Int. Cl.: B23Q 7/04, B27C 9/00, B27M 1/08

(54) **BEARBEITUNGSVORRICHTUNG MIT EINEM WERKSTÜCKTISCH**
PROCESSING DEVICE WITH A WORKPIECE TABLE
DISPOSITIF DE TRAITEMENT DOTE D'UNE TABLE PORTE-PIECE

(30) Priorität: 22.09.2014 DE 102014219098
(43) Veröffentlichungstag der Anmeldung: 23.03.2016
(73) Patentinhaber: HOMAG GmbH, 72296 Schopfloch (DE)
(72) Erfinder: Schmieder, Volker, 72116 Mössingen (DE); Sturm, Christian, 72172 Sulz am Neckar (DE); Friese, Stefan, 72285 Pfalzgrafenweiler (DE); Hofer, Jürgen, 72293 Glatten (DE)
(74) Vertreter: Grauel, Andreas

(56) Entgegenhaltungen:
- EP-A1- 1 600 254
- EP-A2- 0 922 547
- EP-A2- 2 159 020
- EP-A2- 2 165 811
- EP-A2- 2 246 165

## Beschreibung

### Technisches Gebiet

Die Erfindung betrifft eine Bearbeitungsvorrichtung.

### Stand der Technik

Bearbeitungsvorrichtungen zur Bearbeitung von Werkstücken, insbesondere zum Bearbeiten von Werkstücken aus Holz, Holzwerkstoffen, Kunststoff oder dergleichen, sind im Stand der Technik vielfach bekannt. Solche Bearbeitungsvorrichtungen weisen üblicherweise einen Werkstücktisch mit einer Werkstückhalterung auf, mittels welcher ein Werkstück anordenbar und zumindest zeitweise klemmend haltbar ist, um während der klemmenden Halterung das Werkstück zu bearbeiten.

Solche Bearbeitungsvorrichtungen sind beispielsweise durch die DE 101 37 839 A1 bekannt geworden, bei welchen zwei Werkstücktische vorgesehen sind, die parallel zueinander in deren Längsrichtung verfahrbar sind, wobei die Werkstücktische Spannelemente aufweisen, um ein Werkstück spannen zu können. Die Spannelemente weisen dabei obere und untere Spannbacken auf, wobei die oberen Spannbacken relativ zu den unteren Spannbacken verfahrbar sind, um ein Werkstück einzuklemmen.

Solche Werkstücktische haben den Nachteil, dass die oberen Spannbacken und die unteren Spannbacken in Längsrichtung des Werkstücktischs versetzt zueinander angeordnet sind. Dies lässt eine Bearbeitung der Werkstücke quer zur Längsrichtung zwischen den beabstandeten Spannelementen nicht zu, weil die Spannelemente in Längsrichtung zu nah zusammen stehen. Auch zeigen solche Werkstücktische den Nachteil, dass dort, wo die Spannelemente angeordnet sind, keine Bearbeitung vorgenommen werden kann.

EP0922547A2 offenbart eine Bearbeitungsvorrichtung mit einem Werkstücktisch mit einem ersten Grundkörper, welcher von einer Vorschubeinheit auf einer Schiene in Längsrichtung des Werkstücktischs verlagerbar angeordnet ist, wobei Spannelemente an dem ersten Grundkörper beabstandet voneinander angeordnet sind, zum Spannen zumindest eines Werkstücks.

### Darstellung der Erfindung, Aufgabe, Lösung, Vorteile

Es ist die Aufgabe der Erfindung, eine Bearbeitungsvorrichtung mit einem verbesserten Werkstücktisch zu schaffen.

Die Aufgabe wird mit den Merkmalen von Anspruch 1 gelöst.

Ein Beispiel betrifft einen Werkstücktisch mit einem ersten Grundkörper, welcher von einer Vorschubeinheit auf einer Schiene verlagerbar anordenbar ist, wobei Spannelemente an dem ersten Grundkörper beabstandet voneinander angeordnet sind, zum Spannen zumindest eines Werkstücks, wobei an zumindest einem Endbereich des Grundkörpers zumindest ein weiteres Spannelement verlagerbar zu dem ersten Grundkörper angeordnet ist. Dadurch kann vorteilhaft der Werkstücktisch an die Länge des Werkstücks angepasst werden und es können auch relativ kurze Werkstücke an ihren Endbereichen eingespannt werden. Dies verbessert die Bearbeitungsqualität bei relativ kurzen Werkstücken. So können auch im Wesentlichen beliebig lange Werkstücke eingespannt werden, so dass die Werkstückenden der Werkstücke jeweils gut bzw. optimal zum Spannelement positionierbar sind bzw. umgekehrt. Dabei kann der Verlagerungshub der verlagerbaren Spannelemente auf einen sinnvollen Spannelementeabstand angepasst sein, so dass bei sinnvollem Abstand der Spannelemente zumindest ein Werkstückende oder die Werkstückenden vor einem verlagerbaren Spannelement gespannt werden kann oder können.

Auch ist es vorteilhaft, wenn die Werkstücktischgeometrie die Bearbeitung eines Werkstücks an drei Seiten, wie von drei Längsseiten, erlaubt, ohne dass das Werkstück umgespannt werden muss.

Erfindungsgemäß ist an beiden Endbereichen des ersten Grundkörpers jeweils zumindest ein weiteres Spannelement verlagerbar zum ersten Grundkörper angeordnet. So können vorteilhaft auch zwei relativ kurze Werkstücke an den beiden Endbereichen des Werkstücktischs angeordnet und bearbeitet werden.

Dabei ist es vorteilhaft, wenn das zumindest eine weitere Spannelement von einem weiteren Grundkörper getragen wird, welcher relativ zum ersten Grundkörper verlagerbar ist. Dadurch kann vorteilhaft auch erreicht werden, dass zumindest zwei Werkstücke in einer Aufspannung vorgesehen sein können und diese vorzugsweise auch an drei Seiten, insbesondere an drei Längsseiten bearbeitet werden können, ohne dass sie umgespannt werden müssten.

Ebenso ist es zweckmäßig, wenn jedes weitere Spannelement von jeweils einem weiteren Grundkörper getragen wird, welcher relativ zum ersten Grundkörper verlagerbar ist. Dadurch wird auch die Führung zweckmäßigerweise übernommen.

Weiterhin ist es vorteilhaft, wenn der weitere Grundkörper mit dem ersten Grundkörper oder mit einem anderen weiteren Grundkörper verbindbar ist. Dadurch braucht der weitere Grundkörper keine eigene Vorschubeinheit und kann mit dem ersten Grundkörper angetrieben bzw. verlagert werden.

Weiterhin ist es zweckmäßig, wenn der weitere Grundkörper mit dem ersten Grundkörper oder mit einem anderen weiteren Grundkörper mittels eines Koppelelements, wie insbesondere einer Koppelstange, verbindbar ist. Dadurch wird eine stabile und möglichst spielfreie Verbindung bewirkt. Auch können so oder ähnlich zusätzliche Spannelemente oder Halteelemente mit zusätzlicher und/oder alternativer Aufspanntechnik an den Werkstücktisch angekoppelt werden.

Weiterhin ist es vorteilhaft, wenn ein Spannelement zwei Spannbacken eines Spannbackenpaares aufweist, welche relativ zueinander verlagerbar sind, um ein Werkstück einzuspannen. Alternativ können auch andere Spannelemente vorgesehen sein. Die Ausführung mit den Spannbacken ist jedoch relativ einfach und zuverlässig.

Auch ist es vorteilhaft, wenn die Spannbacken senkrecht zur Längsrichtung des Werkstücktischs vorstehen. So können die Werkstücke mit ihrer Längserstreckung in Längsrichtung des Werkstücktischs angeordnet und gespannt werden, um so bearbeitet zu werden. Weiterhin ist es vorteilhaft, wenn zumindest ein Spannbacken eines Spannbackenpaares verschwenkbar ausgebildet ist, so dass es von einer Ausrichtung senkrecht zur Längsrichtung des Werkstücktischs in eine dazu verschwenkte Ausrichtung, insbesondere in eine Ausrichtung parallel zur Längsrichtung des Werkstücktischs, verschwenkbar ist.

Dabei ist es auch vorteilhaft, wenn ein Spannelement zwei Paar Spannbacken mit jeweils zwei Spannbacken aufweist, wobei jeweils zumindest einer der Spannbacken eines Paares relativ zu dem anderen Spannbacken des Paares verlagerbar ist. Gemäß der Erfindung ist es auch vorteilhaft, wenn die Spannbacken eines ersten Paares in einer ersten Richtung senkrecht zur Längsrichtung abragen, wobei die Spannbacken eines zweiten Paares in die entgegengesetzte Richtung senkrecht zur Längsrichtung abragen. So können zwei parallel zueinander vorgesehene Aufspannmöglichkeiten realisiert werden.

Die Spannelemente des Werkstücktischs sind vorteilhaft derart ausgebildet, dass zwischen den Spannelementen und insbesondere auch seitlich und/oder vor und/oder unter den Spannelementen genügend Freiraum zur Verfügung steht, dass eine Durchführung bzw. eine Vorbeiführung von Werkzeugen zur Bearbeitung des Werkstücks möglich ist.

Auch ist es möglich, dass ein Spannelement als Kurzteilspanner vorgesehen ist, insbesondere mit Anlagebolzen innerhalb des Spannelements zur Verdrehsicherung des Werkstücks, so dass auch insbesondere ein kurzes Werkstück nur in dem einen Spannelement als Kurzteilspanner spannbar ist und insbesondere auch verdrehsicherbar ist.

Vorteilhaft ist es, wenn zumindest zwei Werkstücktische vorgesehen sind. Diese können vorteilhaft nebeneinander und parallel zueinander angeordnet und verfahrbar sein, so dass die Effizienz der Bearbeitungsvorrichtung gesteigert werden kann.

Auch ist es vorteilhaft, wenn der jeweilige Werkstücktisch mittels jeweils einer Vorschubeinheit in seiner Längsrichtung verlagerbar ist.

Auch ist es vorteilhaft, wenn die zumindest zwei Werkstücktische parallel und benachbart zueinander verlagerbar geführt sind. Dadurch wird eine erhöhte Effizienz bei geringem Bauraumbedarf erreicht.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Figur 1: eine schematische Darstellung einer Bearbeitungsvorrichtung,
- Figur 2: eine schematische Darstellung eines Werkstücktischs, und
- Figur 3: eine schematische Darstellung einer Einspannung eines Werkstücks.

### Bevorzugte Ausführung der Erfindung

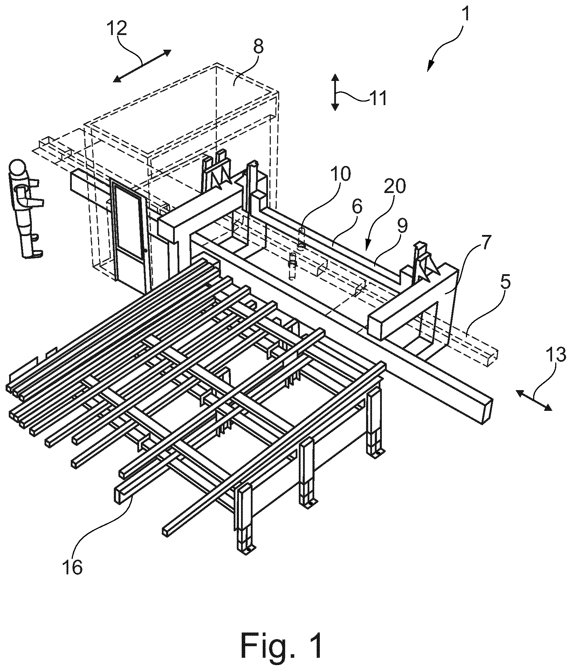

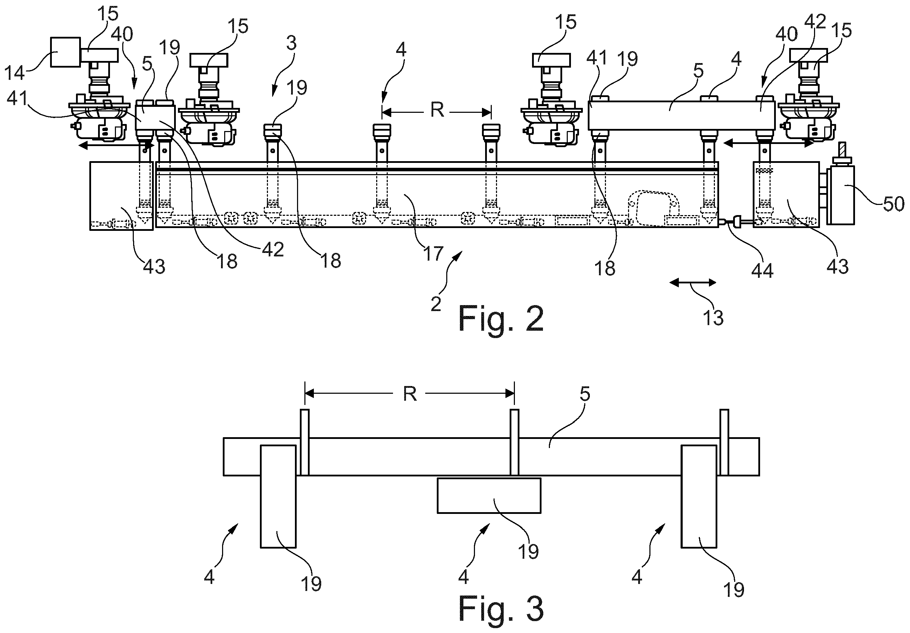

Die Figuren 1 und 2 zeigen eine Darstellung einer Bearbeitungsvorrichtung 1, insbesondere zum Bearbeiten von Werkstücken 5 aus Holz, Holzwerkstoffen, Kunststoff oder dergleichen. Dabei können die Werkstücke 5 beispielsweise eher längliche, balkenartige Werkstücke oder eher flache, eher zweidimensionale, brettartige Werkstücke sein.

Die Bearbeitungsvorrichtung 1 weist einen Werkstücktisch 2 mit einer Werkstückhalterung 3 mit Spannelementen 4 zum Spannen eines Werkstücks auf, mittels welcher Werkstücke 5 zur Bearbeitung sicher gehalten werden können. Der Werkstücktisch 2 ist bevorzugt mit einer Vorschubeinheit 20 verbunden ausgebildet, mittels welcher der Werkstücktisch 2 in Richtung 13 verlagerbar ausgebildet ist. Dabei ist die Richtung 13 vorteilhaft senkrecht zur Richtung 11 und zur Richtung 12 ausgerichtet.

Weiterhin ist eine Zuführvorrichtung 6 vorgesehen, welche dazu dient, ein Werkstück 5 der Werkstückhalterung 3 des Werkstücktischs 2 zuzuführen und das Werkstück 5 auf dem Werkstücktisch 2 zu platzieren.

Weiterhin ist ein Vorrichtungsgestell 7 vorgesehen, an welchem die Zuführvorrichtung 6, auch Manipulator genannt, verlagerbar angeordnet ist. Auch ist eine Führungsvorrichtung 8 vorgesehen, an welcher die Zuführvorrichtung 6 weiterhin verlagerbar angelenkt ist. So ist die Zuführvorrichtung 6 an einer Seite an dem Vorrichtungsgestell 7 und an der anderen Seite an der Führungsvorrichtung 8 verlagerbar angeordnet. Dabei kann die Zuführvorrichtung 6 mit ihrem länglichen Trägerelement 9 und den daran angeordneten Spannelementen 10 sowohl in der vertikalen Richtung 11 als auch in der lateralen Richtung 12, die senkrecht zur Richtung 11 ausgerichtet ist, bewegt werden.

Die Führungsvorrichtung 8 ist vorteilhaft als Portal oder als Traverse ausgebildet, an welcher ein Werkzeugschlitten 14 verlagerbar angeordnet ist, um ein Werkzeug 15 in Richtung 12 und/oder in Richtung 11 verlagern zu können. Dadurch kann das Werkstück 5 in Längsrichtung des Werkstücktischs 2 verlagert werden und dabei an dem Werkzeug 15 zur Bearbeitung vorbeigeführt werden.

Weiterhin kann noch ein Zuführ- und/oder Auslauftisch 16 vorgesehen sein, mittels welchem die Werkstücke 5 zugeführt und/oder abgeführt werden können, so dass der Bearbeitungsvorrichtung 1 ein Vorrat an Werkstücken 5 zur Verfügung gestellt werden kann, um diese effizient bearbeiten zu können oder diese von der Bearbeitungsvorrichtung 1 wieder abführen und einer weiteren Bearbeitung oder Kommissionierung zuführen zu können.

Die Führungsvorrichtung 8 kann beispielsweise als ein feststehendes Portal ausgebildet sein, wobei der Werkstücktisch in seiner Längsrichtung verfahrbar ist.

Das Vorrichtungsgestell 7 ist vorzugsweise als ein durchgängig verbundenes Gestell ausgebildet, an dem der Werkstücktisch 2 oder die Werkstücktische, die Werkzeugschlitten und die Zuführvorrichtung 6 gleitend verbunden sind.

An der feststehenden Führungsvorrichtung 8, die als Bearbeitungsportal ausgebildet ist, gleiten sowohl die Werkzeuge 15 auf entsprechenden Werkzeugschlitten 14, die auch als Kreuzschlitten ausgebildet sein können, als auch die Zuführvorrichtung entlang.

Mit diesem Vorrichtungsgestell 7 können die Grundkomponenten der Bearbeitungsvorrichtung 1 gemeinsam transportiert werden, weil sie miteinander verbunden sind.

Der Werkstücktisch 2 ist dabei bevorzugt als länglich ausgebildeter Tisch mit einem entsprechend länglich ausgebildeten Grundkörper 17 ausgebildet, an welchem die Werkstückhalterung 3 mit den benachbart zueinander angeordneten Spannelementen 4 angeordnet ist. Die Spannelemente 4 sind entlang der x-Richtung 13 benachbart zueinander angeordnet, so dass ein Werkstück 5 mit den Spannelementen 4 gehalten werden kann, wobei das Werkstück entlang der x-Richtung 13 orientiert von den Spannelementen 4 gehalten werden kann. Da der Werkstücktisch 2 mit seiner Vorschubeinrichtung in x-Richtung 13 verlagerbar ist, ist auch die damit verbundene Werkstückhalterung 3 in x-Richtung verlagerbar und damit sind auch die Spannelemente 4 in x-Richtung verlagerbar. Dadurch kann vor der Positionierung des Werkstücks in den Spannelementen 4 des Werkstücktischs 2 der Werkstücktisch 2 in x-Richtung 13 verlagert werden, um die Position des Werkstücks 5 in x-Richtung 13 relativ zum Werkstücktisch 2 zu definieren.

Die Spannelemente 4 bestehen aus zwei zueinander verlagerbaren Spannbacken 18, 19, die in z-Richtung 11 verlagerbar sind, um zwischen sich ein Werkstück 5 zu klemmen. Alternativ können auch andere Spannelemente vorgesehen sein. Die Spannbacken 18, 19 stehen dabei in y-Richtung 12 vor, um zwischen sich ein Werkstück 5 einklemmen zu können. Dabei ist es vorteilhaft, wenn die Spannbacken 18, 19 derart ausgebildet sind, dass Spannbacken 18, 19 paarweise derart angeordnet sind, dass sie in beiden y-Richtungen vorstehend angeordnet sind, so dass zwei Aufspannungen zwischen den beiden Spannbackenpaaren 18, 19 möglich sind.

Der Abstand zwischen benachbarten Spannelementen 4 kann dabei vorteilhaft so ausreichend groß gewählt werden, um auch eine Endenbearbeitung an einer Schmalseite oder vorteilhaft auch an beiden Schmalseiten des Werkstücks 5, also an den kurzen Werkstückseiten, zwischen zwei benachbarten Spannelementen 4 und die Längsbearbeitung einer Längsseite des Werkstücks in einer Aufspannung durchführen zu können. Dies bedeutet, dass der Abstand R zumindest so groß ist, dass ein Werkzeug 15 hindurchgeführt werden kann.

Die Spannelemente 4 sind bevorzugt in einem weitgehend starren Spannelementeraster angeordnet, siehe Figur 2. Das Abstandsraster R ist dabei so gewählt, dass eine Bearbeitung der Werkstücke 5 auch zwischen den einzelnen Spannelementen 4 möglich ist. Dabei sind die Spannelemente 4 mit drehbaren, oberen Spannbacken 19 ausgebildet, um diese zumindest vereinzelt um 90° wegdrehen zu können, um den von dem Spannbacken ansonsten eingenommenen Platz für eine weitere Bearbeitung frei zu machen. Die normale Stellung der Spannbacken 18, 19 ist dabei die Stellung quer zur Längsrichtung 13 des Werkstücktischs. In der weggedrehten Stellung ist die obere Spannbacke 19 in Längsrichtung 13 gedreht.

Dies zeigt die Figur 3 schematisch. Es ist ein Werkstück 5 mit zwei Spannelementen 4 gehalten gezeigt, wobei das mittlere Spannelement 4 eine obere Spannbacke 19 aufweist, die um 90° verdreht angeordnet ist, um die Oberfläche des Werkstücks 5 freizugeben.

Der Werkstücktisch 2 ist im Ausführungsbeispiel der Figur 2 mit mindestens einem, am Rand des Werkstücktischs 2 angebrachten und beweglich ausgebildeten Spannelement 40 versehen, das in seinem Abstand zu dem benachbarten Spannelement 4 verstellbar ist. Das in Längsrichtung 13 des Werkstücktischs verstellbare Spannelement 40 ermöglicht die Einstellung von Spannelementen 4, 40 auch bei kurzen Werkstücken 5 so, dass beide Werkstückenden 41, 42 von einem Spannelement 4, 40 gehalten werden können.

Der Abstand der beiden Spannelemente 4, 40 kann für die Bearbeitung des Werkstücks derart optimal klein eingestellt werden, dass auch kurze Werkstücklängen von zwei Spannelementen 4, 40 gespannt werden können. Dies gilt vorzugsweise für nahezu beliebige Werkstücklängen.

Dabei kann bei kürzeren Werkstücklängen der Werkstücktisch 2 derart bestückt werden, dass in Längsrichtung 13 nebeneinander auch zwei oder mehr Werkstücke gleichzeitig aufgespannt werden können. Dabei dient vorzugsweise an jedem Endbereich des Werkstücktischs 2 ein bewegliches und verstellbares Spannelement 40 zur gleichzeitigen Aufspannung von mindestens zwei Werkstücken 5 an einem Werkstücktisch 2.

Die Spannelemente 40 weisen dabei ebenfalls einen Grundkörper 43 auf, welcher auf der gleichen Schiene beweglich ist, wie der Grundkörper 17 des mittleren Teils des Werkstücktischs 2. Dabei kann der Grundkörper 43 des verlagerbaren Spannelements 40 mittels eines Koppelelements 44, wie einer Koppelstange, mit dem Grundkörper 17 des mittleren Teils des Werkstücktischs 2 verbunden werden. Dabei lässt sich der Grundkörper 43 vorteilhafterweise an unterschiedlichen Positionen des Koppelelements befestigen, so dass verschiedene Abstände zwischen den Spannelementen 4 und 40 einstellbar sind.

Eine Verstellung der beweglich bzw. verlagerbar ausgebildeten Spannelemente 40 kann durch abwechselndes Klemmen des Grundkörpers 43 als Spannelementschlitten am mittleren Teil des Werkstücktischs mittels des Koppelelements 44 und an der Schiene als Führungsbahn erfolgen.

Als Spannelemente sind Klemmspanner mit oberem und unterem Spannbacken gezeigt. Grundsätzlich sind auch andere Spannelemente verwendbar, wie beispielsweise Vakuum-Saugspanner.

Auch können zusätzliche Konsolen mit dem Werkstücktisch verbunden werden.

Es ist auch zu erkennen, dass an dem Werkstücktisch ein Zusatzaggregat 50 angeordnet ist, um eine Bearbeitung an einem Werkstück 5 durchführen zu können, das beispielsweise mittels einer Zuführvorrichtung an das Aggregat 50 heranführbar ist.

Die Zuführvorrichtung kann dabei auch andere Vorgänge unterstützend durchführen, wie beispielsweise eine automatisierte Entnahme einer Glasleiste.

Bei einem Werkstücktisch 2 ist ein manuelles Einlegen von Werkstücken 5, wie insbesondere Kurzteile, möglich. Diese können parallel zur Längsrichtung oder alternativ auch quer zur Längsrichtung angeordnet und gespannt werden.

Der Werkstücktisch erlaubt vorteilhaft auch ein Spannen in einem speziell dafür ausgebildeten Kurzteilspanner, insbesondere mit Anlagebolzen innerhalb des Spannelements zur Verdrehsicherung des Werkstücks, bei welchem eine Werkstückbeschickung mit manueller Belegung durch einen Bediener oder durch eine automatisierte Beschickung mittels eines Manipulators vorgesehen sein kann.

Besonders vorteilhaft ist auch die gleichzeitige Bearbeitung von Werkstücken innerhalb der Bearbeitungsvorrichtung an zwei Werkstücktischen, wobei dabei insbesondere auch innerhalb der Werkstücktische von einer Spannerseite zur anderen Spannerseite umgespannt werden kann. Dabei kann das jeweilige Werkstück an dem einen Werkstücktisch bzw. an dem anderen Werkstücktisch gespannt werden, wobei die Bearbeitung der Werkstücke auch mit zwei unterschiedlichen Bearbeitungswerkzeugen jeweils an einem der Werkstücke vorgenommen werden kann.

Besonders vorteilhaft ist dabei ein Umspannen eines Werkstücks mit einem Manipulator an einem Werkstücktisch, während am anderen Werkstücktisch das dort gespannte Werkstück bearbeitet wird.

Auch ist es vorteilhaft, wenn ein Manipulator vorgesehen ist, welcher auch ein Versetzen der Werkstücke vom Werkstücktisch der einen Fertigungszelle in einen Werkstücktisch einer anderen Fertigungszelle vornehmen kann. Dabei kann eine der Fertigungszellen eine anderweitige Bearbeitung vornehmen als die andere Fertigungszelle. So kann beispielsweise eine erste Fertigungszelle die Querbearbeitungen und die zweite Fertigungszelle die Längsbearbeitungen vornehmen. Als Fertigungszelle kann dabei eine Bearbeitungsvorrichtung angesehen werden.

### Bezugszeichenliste

- 1: Bearbeitungsvorrichtung
- 2: Werkstücktisch
- 3: Werkstückhalterung
- 4: Spannelement
- 5: Werkstück
- 6: Zuführvorrichtung
- 7: Vorrichtungsgestell
- 8: Führungsvorrichtung
- 9: Trägerelement
- 10: Spannelement
- 11: z-Richtung
- 12: y-Richtung
- 13: x-Richtung
- 14: Werkzeugschlitten
- 15: Werkzeug
- 16: Zuführ- und/oder Auslauftisch
- 17: Grundkörper
- 18: Spannbacken
- 19: Spannbacken
- 20: Vorschubeinheit
- 40: Spannelement
- 41: Werkstückende
- 42: Werkstückende
- 43: Grundkörper
- 44: Koppelelement
- 50: Zusatzaggregat

## Patentansprüche

1. Bearbeitungsvorrichtung (1), insbesondere zum Bearbeiten von Werkstücken (5) aus Holz, Holzwerkstoffen, Kunststoff oder dergleichen, mit zumindest einem Werkstücktisch (2), wobei der zumindest eine Werkstücktisch (2) einen ersten Grundkörper (17) aufweist, welcher von einer Vorschubeinheit auf einer Schiene verlagerbar angeordnet ist, wobei Spannelemente (18, 19) an dem ersten Grundkörper (17) beabstandet voneinander angeordnet sind, zum Spannen zumindest eines Werkstücks (5), wobei an beiden Endbereichen des ersten Grundkörpers (17) jeweils zumindest ein weiteres Spannelement (40) verlagerbar zum ersten Grundkörper (17) angeordnet ist, wobei ein Spannelement (4) zwei Paar Spannbacken (18, 19) mit jeweils zwei Spannbacken aufweist, wobei jeweils zumindest einer der Spannbacken (19) eines Paares relativ zu dem anderen Spannbacken (18) des Paares verlagerbar ist und wobei die Spannbacken (18,19) eines ersten Paares in einer ersten Richtung senkrecht zur Längsrichtung (13) des Werkstücktischs (2) abragen, wobei die Spannbacken eines zweiten Paares in die entgegengesetzte Richtung senkrecht zur Längsrichtung (13) abragen und wobei der jeweilige Werkstücktisch (2) mittels jeweils einer Vorschubeinheit (20) in seiner Längsrichtung (13) verlagerbar ist.

2. Bearbeitungsvorrichtung nach Anspruch 1, **dadurch gekennzeichnet, dass** das zumindest eine weitere Spannelement (40) von einem weiteren Grundkörper (43) getragen wird, welcher relativ zum ersten Grundkörper (17) verlagerbar ist.

3. Bearbeitungsvorrichtung nach einem der vorhergehenden Ansprüche, **dadurch gekennzeichnet, dass** jedes weitere Spannelement (40) von jeweils einem weiteren Grundkörper (43) getragen wird, welcher relativ zum ersten Grundkörper (17) verlagerbar ist.

4. Bearbeitungsvorrichtung nach Anspruch 2 oder 3, **dadurch gekennzeichnet, dass** der weitere Grundkörper (43) mit dem ersten Grundkörper (17) oder mit einem anderen weiteren Grundkörper (43) verbindbar ist.

5. Bearbeitungsvorrichtung nach Anspruch 4, **dadurch gekennzeichnet, dass** der weitere Grundkörper (43) mit dem ersten Grundkörper (17) oder mit einem anderen weiteren Grundkörper (43) mittels eines Koppelelements (44), wie insbesondere einer Koppelstange, verbindbar ist.

6. Bearbeitungsvorrichtung nach einem der vorhergehenden Ansprüche, **dadurch gekennzeichnet, dass** ein Spannelement (4, 40) zwei Spannbacken (18,19) eines Spannbackenpaares aufweist, welche relativ zueinander verlagerbar sind, um ein Werkstück (5) einzuspannen.

7. Bearbeitungsvorrichtung nach einem der vorhergehenden Ansprüche, **dadurch gekennzeichnet, dass** die Spannbacken (18,19) senkrecht zur Längsrichtung des Werkstücktischs (2) vorstehen.

8. Bearbeitungsvorrichtung nach einem der vorhergehenden Ansprüche, **dadurch gekennzeichnet, dass** zumindest ein Spannbacken (19) eines Spannbackenpaares (18, 19) verschwenkbar ausgebildet ist, so dass es von einer Ausrichtung senkrecht zur Längsrichtung (13) des Werkstücktischs (2) in eine dazu verschwenkte Ausrichtung, insbesondere in eine Ausrichtung parallel zur Längsrichtung (13) des Werkstücktischs (2), verschwenkbar ist.

9. Bearbeitungsvorrichtung nach einem der vorhergehenden Ansprüche, **dadurch gekennzeichnet, dass** ein Spannelement als Kurzteilspanner vorgesehen ist, insbesondere mit Anlagebolzen innerhalb des Spannelements zur Verdrehsicherung des Werkstücks, so dass auch insbesondere ein kurzes Werkstück nur in dem einen Spannelement als Kurzteilspanner spannbar ist und insbesondere auch verdrehsicherbar ist.

10. Bearbeitungsvorrichtung nach einem der vorhergehenden Ansprüche, **dadurch gekennzeichnet, dass** zumindest zwei Werkstücktische vorgesehen sind.

## Claims

1. A processing device (1), in particular for processing work pieces (5) made of wood, wood materials, plastic or the like, with at least one work piece table (2), wherein the at least one work piece table (2) has a first base body (17) which is arranged such that it can be displaced from an advance unit on a rail, wherein clamping elements (18, 19) are arranged on the first base body (17) spaced apart from each other, in order to clamp at least one work piece (5), wherein at least one respective further clamping element (40) is arranged in both end regions of the first base body (17) such that it can be displaced from the first base body (17), wherein a clamping element (4) has two pairs of clamping jaws (18, 19) with two respective clamping jaws, wherein at least a respective one of the clamping jaws (19) of a pair can be displaced relative to the other clamping jaw (18) of the pair and wherein the clamping jaws (18, 19) of a first pair protrude in a first direction perpendicularly to the longitudinal direction (13) of the work piece table (2), wherein the clamping jaws of a second pair protrude in the opposite direction perpendicularly to the longitudinal direction (13) and wherein the respective work piece table (2) can be displaced in its longitudinal direction (13) by means of a respective advance unit (20).

2. The processing device according to claim 1, **characterised in that** at least one further clamping element (40) is carried by a further base body (43) which can be displaced relative to the first base body (17).

3. The processing device according to one of the preceding claims, **characterised in that** each further clamping element (40) is carried by a respective further base body (43) which can be displaced relative to the first base body (17).

4. The processing device according to claim 2 or 3, **characterised in that** the further base body (43) can be connected to the first base body (17) or to another further base body (43).

5. The processing device according to claim 4, **characterised in that** the further base body (43) can be connected to the first base body (17) or to another further base body (43) by means of a coupling element (44), such as in particular a coupling rod.

6. The processing device according to one of the preceding claims, **characterised in that** a clamping element (4, 40) has two clamping jaws (18, 19) of a pair of clamping jaws which can be displaced relative to one another in order to clamp a work piece (5).

7. The processing device according to one of the preceding claims, **characterised in that** the clamping jaws (18, 19) protrude perpendicularly to the longitudinal direction of the work piece table (2).

8. The processing device according to one of the preceding claims, **characterised in that** at least one clamping jaw (19) of a pair of clamping jaws (18, 19) is designed such that it can be pivoted, such that it can be pivoted from its orientation perpendicularly to the longitudinal direction (13) of the work piece table (2) to a pivoted orientation thereof, in particular to an orientation parallel to the longitudinal direction (13) of the work piece table (2) .

9. The processing device according to one of the preceding claims, **characterised in that** a clamping element is provided as a short piece clamper, in particular with attachment bolts within the clamping element in order to provide an anti-rotation means for the work piece, so that in particular even a short work piece can be clamped in the one clamping element as a short piece clamper only and can in particular also be secured against rotation.

10. The processing device according to one of the preceding claims, **characterised in that** at least two work piece tables are provided.

## Revendications

1. Dispositif d'usinage (1) destiné en particulier à l'usinage de pièces à usiner (5) se composant de bois, de matériaux dérivés du bois, de matière plastique ou se composant de matériaux analogues, ledit dispositif d'usinage comprenant au moins une table porte-pièces (2), où la table porte-pièces (2) au moins au nombre de un présente un premier corps de base (17) qui est disposé en pouvant être déplacé sur un rail, par une unité d'avance, où des éléments de serrage (18, 19) sont disposés sur le premier corps de base (17) en étant espacés les uns des autres, lesdits éléments de serrage servant au serrage d'au moins une pièce à usiner (5), où, au niveau des deux zones d'extrémité du premier corps de base (17), au moins un autre élément de serrage (40) est disposé en pouvant à chaque fois être déplacé par rapport au premier corps de base (17), où un élément de serrage (4) présente deux paires de mâchoires de serrage (18, 19) ayant à chaque fois deux mâchoires de serrage, où au moins l'une des mâchoires de serrage (19) d'une paire peut à chaque fois être déplacée par rapport à l'autre mâchoire de serrage (18) de la paire et où les mâchoires de serrage (18, 19) d'une première paire font saillie, dans une première direction, perpendiculairement à la direction longitudinale (13) de la table porte-pièces (2), où les mâchoires de serrage d'une deuxième paire font saillie, dans la direction opposée, perpendiculairement à la direction longitudinale (13), et où la table porte-pièces respective (2) peut être déplacée à chaque fois au moyen d'une unité d'avance (20), suivant la direction longitudinale (13) de ladite table porte-pièces.

2. Dispositif d'usinage selon la revendication 1, **caractérisé en ce que** l'autre élément de serrage (40) au moins au nombre de un est supporté par un autre corps de base (43) qui peut être déplacé par rapport au premier corps de base (17).

3. Dispositif d'usinage selon l'une des revendications précédentes, **caractérisé en ce que** chaque autre élément de serrage (40) est supporté à chaque fois par un autre corps de base (43) qui peut être déplacé par rapport au premier corps de base (17).

4. Dispositif d'usinage selon la revendication 2 ou 3, **caractérisé en ce que** l'autre corps de base (43) peut être relié au premier corps de base (17) ou bien encore relié à un autre corps de base (43).

5. Dispositif d'usinage selon la revendication 4, **caractérisé en ce que** l'autre corps de base (43) peut être relié au premier corps de base (17) ou bien encore relié à un autre corps de base (43), au moyen d'un élément de couplage (44), comme en particulier une tige de couplage.

6. Dispositif d'usinage selon l'une quelconque des revendications précédentes, **caractérisé en ce qu'**un élément de serrage (4, 40) présente deux mâchoires de serrage (18, 19) d'une paire de mâchoires de serrage, mâchoires qui peuvent être déplacées l'une par rapport à l'autre pour serrer une pièce à usiner (5).

7. Dispositif d'usinage selon l'une quelconque des revendications précédentes, **caractérisé en ce que** les mâchoires de serrage (18, 19) font saillie perpendiculairement à la direction longitudinale de la table porte-pièces (2).

8. Dispositif d'usinage selon l'une quelconque des revendications précédentes, **caractérisé en ce qu'**au moins une mâchoire de serrage (19) d'une paire de mâchoires de serrage (18, 19) est conçue en pouvant pivoter, de sorte que ladite mâchoire de serrage peut pivoter, passant d'une orientation perpendiculaire à la direction longitudinale (13) de la table porte-pièces (2), à une orientation ayant pivoté par rapport à ladite orientation perpendiculaire, en particulier suivant une orientation parallèle à la direction longitudinale (13) de la table porte-pièces (2).

9. Dispositif d'usinage selon l'une quelconque des revendications précédentes, **caractérisé en ce qu'**il est prévu un élément de serrage conçu comme un tendeur pour pièces courtes, ledit élément de serrage comprenant en particulier un boulon d'appui placé à l'intérieur de l'élément de serrage et servant à la protection contre tout risque de torsion de la pièce à usiner, de sorte qu'une pièce à usiner courte ne peut aussi, en particulier, être serrée que dans le seul élément de serrage conçu comme un tendeur pour pièces courtes et peut aussi, en particulier, être protégée contre tout risque de torsion.

10. Dispositif d'usinage selon l'une quelconque des revendications précédentes, **caractérisé en ce qu'**il est prévu au moins deux tables porte-pièces.
